# FASCICULE DE BREVET EUROPEEN

(11) **EP 4 497 680 B1**
(45) Date de publication et mention de la délivrance du brevet: **11.03.2026**
(21) Numéro de dépôt: 24191046.2
(22) Date de dépôt: 26.07.2024
(51) Int. Cl.: B64D 1/16, A62C 3/02, B64C 1/20

(54) **AÉRONEF COMPORTANT AU MOINS UN RÉSERVOIR TUBULAIRE DE STOCKAGE D'UN FLUIDE EXTINCTEUR**
FLUGZEUG MIT MINDESTENS EINEM ROHRFÖRMIGEN SPEICHERBEHÄLTER FÜR EIN LÖSCHFLUID
AIRCRAFT COMPRISING AT LEAST ONE TUBULAR TANK FOR STORING A FIRE EXTINGUISHING FLUID

(30) Priorité: 27.07.2023 FR 2308102
(43) Date de publication de la demande: 29.01.2025
(73) Titulaire: Airbus Operations (S.A.S.), 31060 Toulouse Cedex 9 (FR)
(72) Inventeur: MAZARS, Vincent, 31060 Toulouse (FR)
(74) Mandataire: Cabinet Le Guen Maillet

(56) Documents cités:
- EP-A2- 2 228 302
- CN-U- 218 839 759
- FR-A1- 2 813 277
- US-A1- 2008 210 825

## Description

### DOMAINE TECHNIQUE

La présente invention concerne l'adaptation d'un aéronef de ligne, c'est-à-dire un aéronef destiné à effectuer des vols commerciaux de transport de passagers ou de marchandises, en un bombardier d'eau, c'est-à-dire en un aéronef de lutte contre les incendies. Plus particulièrement, l'invention concerne la mise en œuvre des réservoirs de fluide extincteur dans un tel aéronef.

### ÉTAT DE LA TECHNIQUE ANTÉRIEURE

Habituellement, pour lutter contre les incendies, il est connu d'utiliser des aéronefs spécifiquement adaptés qui sont appelés bombardiers d'eau. Ces aéronefs sont adaptés, dès leur conception, pour embarquer de larges volumes de fluide extincteur (par exemple un mélange d'eau et d'un agent extincteur).

Le document CN 218 839 759 U décrit un aéronef équipé d'un dispositif de stockage et de pulvérisation d'agent extincteur. Ce dispositif comprend plusieurs réservoirs de liquide situés sur le plancher de l'aéronef et inclinés par rapport à celui-ci. Les réservoirs sont reliés au dispositif de pulvérisation, qui comprend des vannes de décharge, par des tuyaux de décharge. Ce dispositif permet de pulvériser l'agent extincteur vers l'extérieur.

Un inconvénient de ces aéronefs réside dans le fait qu'ils présentent des coûts de conception et de fabrication relativement élevés alors que leur utilisation est limitée.

Pour remédier à ces inconvénients, il est souhaitable d'utiliser les aéronefs de ligne en tant que bombardiers d'eau sans qu'il soit nécessaire de les modifier de manière trop significative pour ne pas à avoir à les modifier structurellement et à ne pas avoir à les requalifier.

Il existe donc un besoin de fournir une solution simple et peu coûteuse permettant d'adapter un aéronef de ligne en un bombardier d'eau tout en gardant la structure d'origine d'un aéronef de ligne.

### EXPOSÉ DE L'INVENTION

Un objet de la présente invention est de proposer un aéronef de ligne embarquant des réservoirs tubulaires contenant un fluide extincteur permettant de ne pas modifier la structure d'origine de l'aéronef.

À cet effet, est proposé un aéronef comportant :
- un fuselage dans lequel est fixé un plancher sensiblement plan séparant ledit fuselage en une partie supérieure et une partie inférieure ;
- au moins un réservoir tubulaire destiné à contenir un fluide extincteur, ledit au moins un réservoir tubulaire étant disposé dans la partie supérieure dudit fuselage et étant fixé audit plancher ;
- au moins un dispositif de vidange fluidiquement connecté entre ledit au moins un réservoir tubulaire et l'extérieur dudit aéronef en traversant successivement ledit plancher et ledit fuselage ;
- au moins un système de libération mobile entre une position de retenue dans laquelle le système de libération empêche le passage dudit fluide extincteur entre ledit au moins un réservoir tubulaire et ledit au moins un dispositif de vidange, et une position de vidange dans laquelle le système de libération autorise le passage dudit fluide extincteur entre ledit au moins un réservoir tubulaire et ledit au moins un dispositif de vidange ; et
- une unité de commande arrangée pour commander le déplacement dudit au moins un système de libération de ladite position de retenue à ladite position de vidange, et inversement.

Selon l'invention, ledit au moins un réservoir tubulaire présente une forme sensiblement en V dans laquelle la pointe du V se situe au niveau dudit au moins un dispositif de vidange et en ce que chaque réservoir tubulaire comporte une partie avant inclinée d'un angle α non nul par rapport audit plancher.

Avantageusement, chaque réservoir tubulaire comporte en outre une partie arrière inclinée d'un angle β non nul par rapport au plancher.

De cette manière, il est possible d'embarquer des réservoirs de fluide extincteur dans un aéronef de ligne sans avoir à modifier sa structure, et notamment sans avoir à renforcer ou modifier le plancher de l'aéronef. De plus, la mise en œuvre de réservoirs tubulaires en forme de V permet de favoriser la vidange du fluide extincteur hors des réservoirs tubulaires. En effet, cette inclinaison permet d'améliorer l'écoulement, par gravité, du fluide extincteur en direction du dispositif de vidange.

Avantageusement, l'aéronef comporte des moyens de fixation dudit au moins un réservoir tubulaire audit plancher.

Avantageusement, et selon l'autre mode de réalisation, lesdits moyens de fixation dudit au moins réservoir tubulaire audit plancher comportent au moins un sabot fixé audit plancher et au moins deux bielles reliant ledit au moins un réservoir audit au moins un sabot et les bielles sont plus longues en s'éloignant dudit au moins un système de libération.

Avantageusement, ledit au moins un réservoir tubulaire comporte, au moins à une de ses extrémités, un dispositif d'aide au délestage comportant des moyens pour mettre sous pression ledit au moins un réservoir tubulaire et pousser ledit fluide extincteur vers ledit au moins un dispositif de vidange.

Avantageusement, ledit dispositif d'aide au délestage comporte un piston se déplaçant en direction dudit au moins un dispositif de vidange lors du délestage dudit fluide extincteur. Avantageusement, ledit dispositif d'aide au délestage comprend un réservoir d'air sous pression, ledit réservoir d'air sous pression étant arrangé pour injecter de l'air sous pression dans le réservoir tubulaire pour déplacer le piston vers ledit au moins un dispositif de vidange. Avantageusement, ledit dispositif d'aide au délestage comprend un réservoir d'air disposé à l'intérieur dudit réservoir tubulaire, où l'air dudit réservoir d'air est mis sous pression lors du remplissage dudit réservoir tubulaire avec ledit fluide extincteur ou par déplacement dudit piston par un treuil motorisé.

Avantageusement, ledit dispositif d'aide au délestage comprend au moins une membrane gonflable, chaque membrane gonflable étant disposée à une extrémité dudit au moins un réservoir tubulaire et se gonflant en direction dudit au moins un dispositif de vidange.

### BRÈVE DESCRIPTION DES DESSINS

Les caractéristiques de l'invention mentionnées ci-dessus, ainsi que d'autres, apparaîtront plus clairement à la lecture de la description suivante d'un exemple de réalisation et de ses variantes, ladite description étant faite en relation avec les dessins joints, parmi lesquels :
[Fig. 1] est une vue de dessus d'un aéronef selon un premier exemple qui n'est pas selon l'invention ;
[Fig. 2] est une vue de côté et en coupe longitudinale de l'aéronef de la Fig. 1 ;
[Fig. 3] est une vue de côté et en coupe transversale de l'aéronef de la Fig. 1 ;
[Fig. 4] est une vue de côté et en coupe longitudinale d'un exemple de dispositif d'aide au délestage selon une première variante ;
[Fig. 5] est une vue de côté et en coupe longitudinale d'un dispositif d'aide au délestage selon une deuxième variante ;
[Fig. 6] est une vue de côté et en coupe longitudinale d'un dispositif d'aide au délestage selon une troisième variante ;
[Fig. 7] est une vue de côté et en coupe longitudinale d'un dispositif d'aide au délestage selon une quatrième variante ;
[Fig. 8] est une vue de côté et en coupe longitudinale d'un aéronef selon un premier exemple de réalisation de l'invention ;
[Fig. 9] est une vue de côté et en coupe transversale de l'aéronef de la Fig. 7 ;
[Fig. 10] est une vue de dessus d'un aéronef selon un deuxième exemple de réalisation de l'invention ;
[Fig. 11] est une vue de côté et en coupe longitudinale de l'aéronef de la Fig. 10 ;
[Fig. 12] est une vue de côté et en coupe transversale de l'aéronef de la Fig. 10 ;

### EXPOSÉ DÉTAILLÉ D'UN EXEMPLE DE RÉALISATION

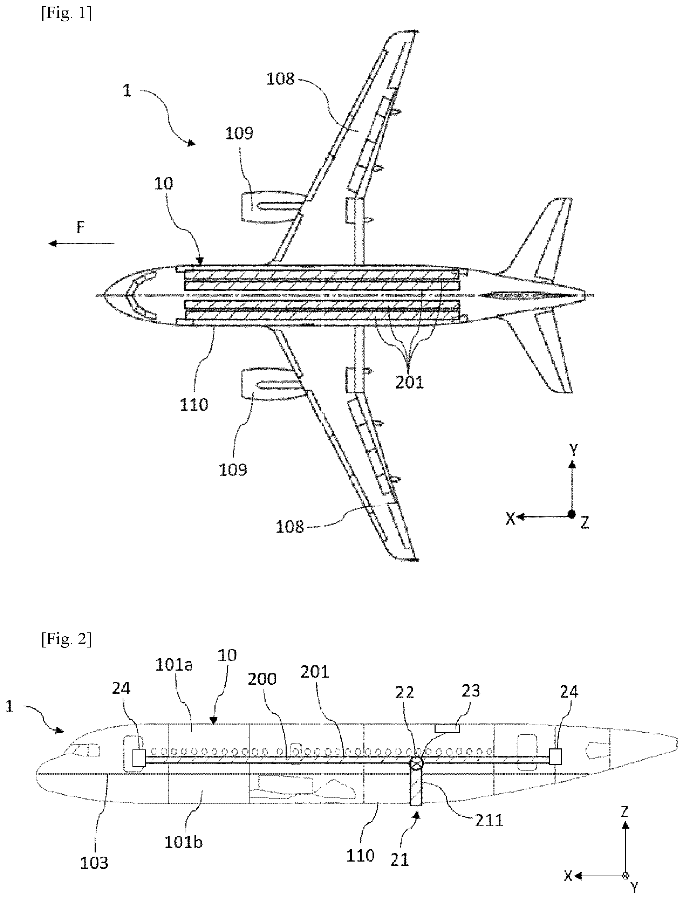

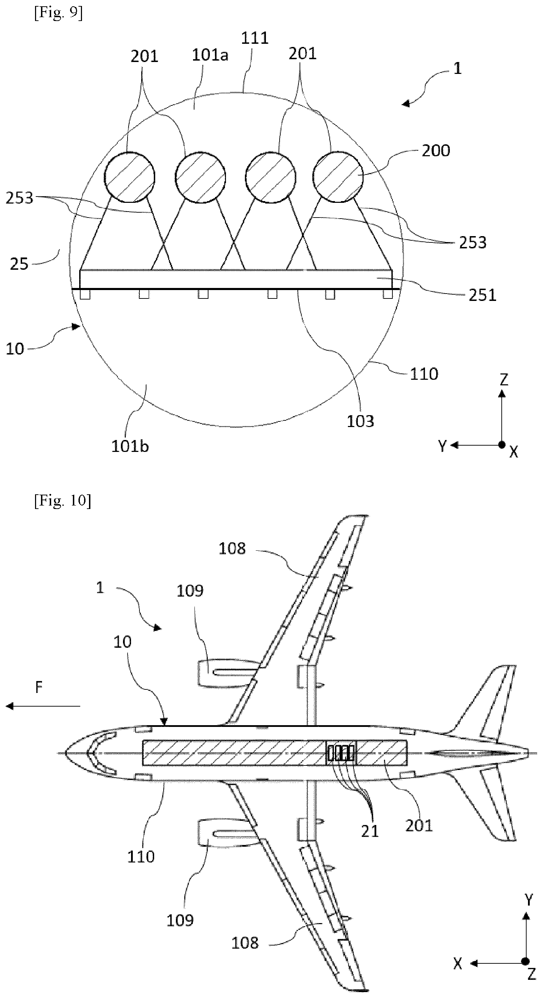

Les Figs. 1 et 10 montrent un aéronef 1 qui comporte un fuselage 10 et deux caissons de voilure 108 portant chacun un système de propulsion 109, par exemple du type turboréacteur ou turbopropulseur.

Dans la description qui suit, les termes relatifs à une position sont pris en référence à un aéronef en position normale de vol, c'est-à-dire comme il est représenté sur les Figs. 2, 9 et 11. Dans la description qui suit, et par convention, on appelle X la direction longitudinale du fuselage qui est horizontale lorsque l'aéronef est au sol, on appelle Y la direction transversale qui est horizontale lorsque l'aéronef est au sol, et Z la direction verticale qui est verticale lorsque l'aéronef est au sol, ces trois directions X, Y et Z étant orthogonales entre elles. L'aéronef 1 comporte un fuselage 10 dans lequel est fixé un plancher 103 sensiblement plan, qui dans les exemples décrits ci-après s'étend sensiblement dans un plan parallèle au plan XY. Le plancher 103 sépare le fuselage 10 en une partie supérieure 101a et une partie inférieure 101b appelée « zone cargo ». La structure de l'aéronef 1 étant celle d'un aéronef de ligne, le plancher 103 est destiné à séparer la partie supérieure 101a et la partie inférieure 101b, qui sont toutes les deux pressurisées. Le plancher 103 est également destiné à recevoir des sièges de passagers ou des marchandises à transporter.

Le principe de l'invention consiste à mettre en œuvre un ou plusieurs réservoirs 201 contenant un fluide extincteur 200 dans la partie supérieure 101a de l'aéronef 1, et plus particulièrement de fixer chacun sur le plancher 103 de l'aéronef 1. Les réservoirs 201 ont chacun une forme tubulaire et s'étendent longitudinalement sur le plancher 103 de l'aéronef 1 de sorte à répartir la masse des réservoirs tubulaires 201 sur la plus grande longueur du plancher 103. De cette manière, il est possible d'utiliser un aéronef de ligne dit standard sans modifications structurales majeures et ceci uniquement en retirant les sièges de passagers pour un avion de transport de passagers. L'invention propose donc une solution simple et peu coûteuse pour adapter un aéronef de ligne destiné au transport de passagers ou de marchandises en un aéronef bombardier d'eau destiné à lutter contre les incendies.

L'aéronef 1 comporte au moins un dispositif de vidange 21 fluidiquement connecté entre les réservoirs tubulaires 201 et l'extérieur 110 de l'aéronef 1 en traversant successivement le plancher 103 et le fuselage 10. Un dispositif de vidange 21 peut être associé à chaque réservoir tubulaire 201, ou bien un dispositif de vidange 21 peut être relié fluidiquement à plusieurs réservoirs tubulaires 201.

Dans cet exemple, le dispositif de vidange 21 se présente sous la forme d'un tube de vidange 211 qui s'étend globalement parallèlement à l'axe Z. Il peut être envisagé d'autres orientations du tube de vidange 211.

L'aéronef 1 comporte également pour chaque dispositif de vidange 21, un système de libération 22 du fluide extincteur 200. Le système de libération 22 est mobile entre une position de retenue dans laquelle le système de libération 22 empêche le passage du fluide extincteur 200 entre le ou les réservoirs tubulaires 201 et le dispositif de vidange 21, et une position de vidange dans laquelle le système de libération 22 autorise le passage du fluide extincteur 200 entre le ou les réservoirs tubulaires 201 et le dispositif de vidange 21. L'aéronef 1 peut donc comporter plusieurs systèmes de libération 22 lorsque plusieurs dispositifs de vidange 21 sont mis en œuvre. Il est également envisageable de ne mettre en œuvre qu'un seul système de libération 22 pour plusieurs dispositifs de vidange 21. Un tel système de libération 22 est classique et n'est donc pas décrit en détails ici. Par exemple, le système de libération 22 peut prendre la forme d'une vanne, d'une trappe ou de tout autre type de mécanisme permettant de gérer le débit de libération du fluide extincteur 200.

Dans les exemples illustrés, le système de libération 22 du fluide extincteur 200 est disposé à la jonction entre les réservoirs tubulaires 201 et le tube de vidange 211 du dispositif de vidange 21. On pourrait également envisager de disposer le système de libération 22 au plus proche de l'orifice aval du dispositif de vidange afin d'optimiser, c'est-à-dire maximiser, le volume des réservoirs tubulaires 201 de sorte à embarquer une quantité maximale de fluide extincteur 200.

En outre, l'aéronef 1 comporte une unité de commande 23 arrangée pour commander le déplacement du ou des systèmes de libération 22 de la position de retenue à la position de vidange, et inversement. De préférence, l'aéronef 1 comporte une unique unité de commande 23 permettant de commander l'ensemble des systèmes de libération 22. On pourrait envisager de mettre en œuvre une unité de commande 23 pour chaque système de libération 22. Les systèmes de libération 22 et l'unité de commande 23 peuvent être manuels, électriques, pneumatiques, électropneumatiques, hydrauliques, etc.

De préférence, l'unité de commande 23 gère le déplacement des systèmes de libération 22 en faisant en sorte de gérer le débit des réservoirs tubulaires 201. Plus particulièrement, l'unité de commande 23 s'arrange pour que les réservoirs tubulaires 201 soient vides en même temps afin d'optimiser la stabilité de l'aéronef. Pour ce faire, il est possible que le débit de vidange de chaque réservoir tubulaire 201 soit différent.

D'une manière générale, les réservoirs 201 sont de forme tubulaire et sont disposés dans la partie supérieure 101a du fuselage 10. Dans les exemples décrits sur les Figs., les réservoirs tubulaires 201 présentent une section circulaire. On comprend évidemment que des sections de formes différentes, par exemple rectangulaire ou elliptique, sont envisageables sans s'écarter du principe de l'invention. Les réservoirs tubulaires 201 s'étendent de préférence longitudinalement le long du plancher 103, c'est-à-dire globalement parallèlement à l'axe longitudinal X pour le premier exemple qui n'est pas selon l'invention et avec un angle α non nul par rapport au plancher 103 pour les premier et deuxième modes des réalisation de l'invention. Ainsi, la masse des réservoirs tubulaires 201 contenant le fluide extincteur 200 est répartie de manière optimale sur l'ensemble de la surface du plancher 103. La forme et la disposition particulière des réservoirs tubulaires permettent donc de ne pas modifier, ni renforcer, le plancher 103 qui est, à l'origine, destiné à transporter des passagers ou des marchandises.

Dans le premier exemple qui n'est pas selon de l'invention présenté aux Figs. 1 à 3, l'aéronef 1 comporte au moins un réservoir tubulaire 201 destiné à contenir un fluide extincteur 200. Dans ce premier mode de réalisation, l'aéronef 1 comporte quatre réservoirs tubulaires. On comprend que l'aéronef 1 pourrait ne comporter qu'un seul réservoir tubulaire 201 ou un nombre plus élevé de réservoirs tubulaires 201 sans s'écarter du principe de l'invention.

Dans ce premier exemple, les réservoirs tubulaires 201 sont fixés parallèlement au plancher 103. Les réservoirs tubulaires 201 sont fixés au plancher 103 par l'intermédiaire de moyens de fixation 25.

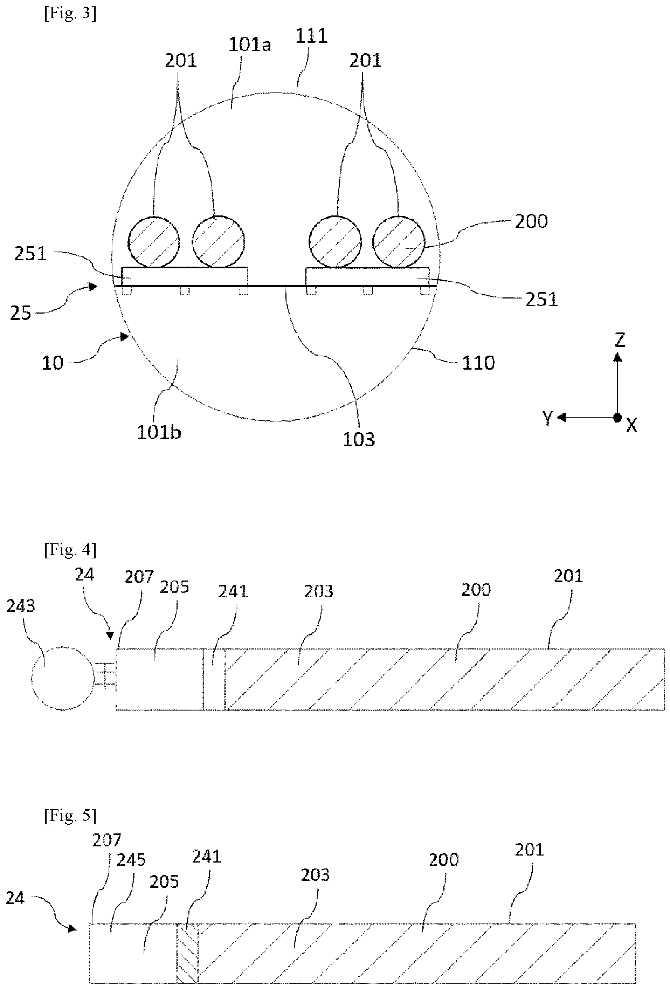

Dans l'exemple illustré sur la Fig. 3, les moyens de fixation 25 prennent la forme de sabots 251 qui sont fixés au plancher 103 et auxquels les réservoirs tubulaires 201 sont fixés. Plus particulièrement, les quatre réservoirs tubulaires 201 sont ici fixés par paire sur les sabots 251 fixés au plancher 103. Par exemple, les sabots 251 sont fixés à distance régulière sur l'ensemble de la longueur des réservoirs tubulaires 201. La distance séparant deux sabots 251 portant une même paire de réservoirs tubulaires 201 est sélectionnée pour que les réservoirs tubulaires 201 gardent leur forme initiale, c'est-à-dire que les réservoirs tubulaires 201 ne doivent pas se déformer, ou flancher, de sorte à favoriser le délestage du fluide extincteur 201. Dans cette description, les moyens de fixation 25 prennent la forme de sabots 251 et de bielles 253. On comprend bien évidemment que d'autres formes de moyens de fixation 25 peuvent être envisagées sans s'écarter du principe de l'invention. Par exemple, les moyens de fixation 25 peuvent comporter un cerclage autour de chaque réservoir, des sangles, des bielles, des sabots ou une combinaison de ces éléments, notamment.

Dans cet exemple, une première paire de réservoirs tubulaires 201 est fixée sur la partie bâbord du plancher 103 tandis qu'une deuxième paire de réservoirs tubulaires 201 est fixée sur la partie tribord du plancher 103. Une telle disposition permet d'optimiser la répartition de la masse des réservoirs tubulaires sur l'ensemble du plancher 103.

D'autres dispositions peuvent évidemment être envisagées en fonction du nombre de réservoirs tubulaires 201 embarqué, notamment.

Selon un mode de réalisation particulier, afin d'optimiser la vidange du fluide extincteur 200 hors des réservoirs tubulaires 201, chaque réservoir tubulaire 201 comporte un ou plusieurs dispositifs d'aide au délestage 24 du fluide extincteur 200. Un dispositif d'aide au délestage 24 comporte des moyens pour mettre sous pression le réservoir tubulaire 201 de sorte à pousser le fluide extincteur 200 vers le dispositif de vidange 21. Le réservoir tubulaire 201 peut par exemple comporter un unique dispositif d'aide au délestage 24, disposé à une première extrémité 207 du réservoir tubulaire 201, lorsque le dispositif de vidange 21 du réservoir tubulaire 201 est situé à l'autre extrémité du réservoir tubulaire 201. Dans le cas où le dispositif de vidange 21 serait situé entre les deux extrémités du réservoir tubulaire 201, il est envisageable de mettre en œuvre un dispositif d'aide au délestage 24 à chacune des extrémités du réservoir tubulaire 201 de sorte à pousser le fluide extincteur 200 vers le dispositif de vidange 21.

Les Figs. 4, 5, 6 et 7 illustrent différents exemples de dispositifs d'aide au délestage 24. La Fig.4 illustre une première variante du dispositif d'aide au délestage 24 qui comprend un piston 241 disposé dans le réservoir tubulaire 201 et mobile entre une position éloignée du dispositif de vidange 21 où le fluide extincteur 200 n'est pas sous pression et une position rapprochée du dispositif de vidange 21 où le fluide extincteur 200 est sous pression. Le piston 241 sépare le réservoir tubulaire 201 en deux parties, à savoir une chambre de fluide extincteur 203 situé du côté du dispositif de vidange 21 et une chambre d'air 205 située du côté de l'extrémité 207 du réservoir tubulaire 201. Le piston 241 est mobile dans le réservoir tubulaire 201 et se déplace en direction du dispositif de vidange 21 (non illustré sur ces figures) afin de mettre sous pression le réservoir tubulaire 201 et ainsi pousser le fluide extincteur 200 vers le dispositif de vidange 21. De cette manière, le délestage du fluide extincteur 200 est contrôlé et optimisé.

Selon cette première variante, le dispositif d'aide au délestage 24 comporte un réservoir d'air sous pression 243 qui est disposé à l'extérieur du réservoir tubulaire 201. Ce réservoir d'air sous pression 243 permet d'injecter, au moment du délestage du fluide extincteur 200, de l'air sous pression dans la chambre d'air 205 du réservoir tubulaire 201 de sorte à déplacer le piston 241 en direction du dispositif de vidange 21.

La Fig. 5 illustre une deuxième variante du dispositif d'aide au délestage 24 comportant également un piston 241 séparant le réservoir tubulaire 201 en une chambre de fluide extincteur 203 et une chambre d'air 205. Dans cette variante, la chambre d'air 205 constitue un réservoir d'air sous pression 245 interne, en ce sens que le réservoir d'air sous pression 245 est ici disposé à l'intérieur du réservoir tubulaire 201, entre le piston 241 et l'extrémité 207 du réservoir tubulaire 201 opposée au dispositif de vidange 21.

Plus particulièrement, le réservoir d'air sous pression 245 est mis sous pression lors du remplissage du réservoir tubulaire 201 avec le fluide extincteur 200. Ainsi, au moment du remplissage du réservoir tubulaire 201, le piston 241 est repoussé vers l'extrémité 207 du réservoir tubulaire 201, mettant alors sous pression l'air de la chambre d'air 205. Lors du délestage, l'air sous pression de la chambre d'air 205 va déplacer le piston 241 vers le dispositif de vidange 21. Le réservoir d'air sous pression 245 agit donc dans cet exemple comme un ressort se comprimant lors du remplissage du réservoir tubulaire 201 et se relâchant lors du délestage.

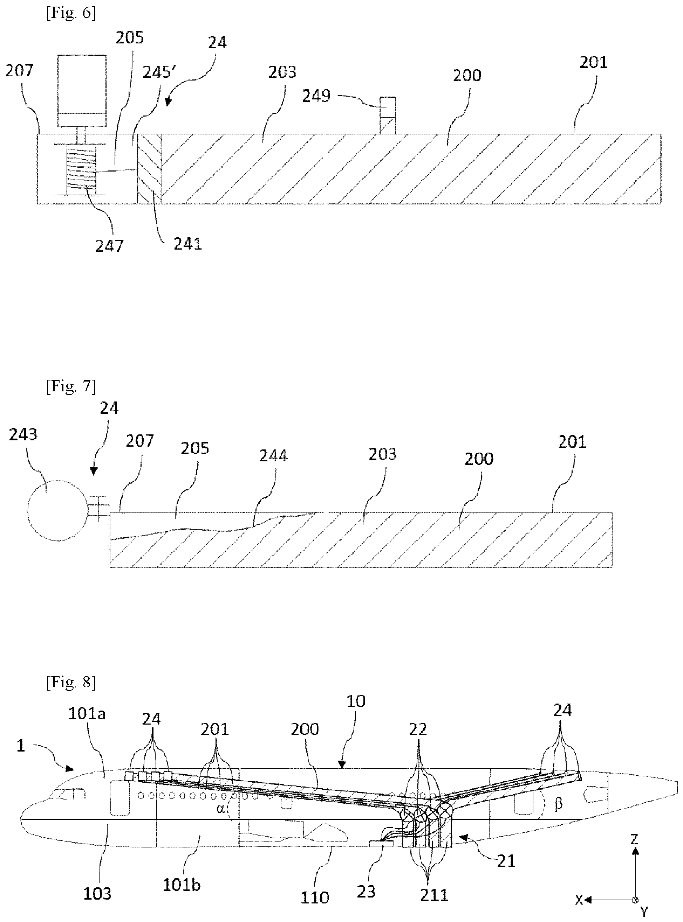

La Fig. 6 illustre une troisième variante du dispositif d'aide au délestage 24 comportant également un piston 241 séparant le réservoir tubulaire en une chambre de fluide extincteur 203 et une chambre d'air 205. Dans cette variante, la chambre d'air 205 constitue aussi un réservoir d'air sous pression 245' interne mais la mise sous pression de l'air de la chambre d'air 205 est obtenue à l'aide d'un treuil 247 motorisé permettant de tirer le piston 241 vers l'extrémité 207 du réservoir tubulaire 201. Lors du délestage, la tension dans le câble du treuil 247 reliant le piston 241 est relâchée et l'air sous pression de la chambre d'air 205 déplace le piston 241 vers le dispositif de vidange 21. Ici, le réservoir d'air sous pression 245' agit également comme un ressort se comprimant à l'aide du treuil 247 et se relâchant lors du délestage.

Pour ces trois variantes, le piston 241 est maintenu en position avant le délestage par le câble du treuil 247 ou par un système de blocage libérable par l'unité de commande.

On peut en outre prévoir un purgeur 249 automatique d'air au niveau de la chambre de fluide extincteur 203 de sorte à permettre une purge automatique de l'air lors du remplissage du réservoir tubulaire en fluide extincteur 200.

Dans les exemples de dispositif d'aide au délestage 24 décrits ci-dessus, le piston 241 est poussé vers le dispositif de vidange 21 pour aider la vidange du fluide extincteur 200. Dans une variante de réalisation non illustrée, il est envisageable de tirer le piston en direction du dispositif de vidange 21. Pour ce faire, le piston 241 peut être assisté dans son déplacement au moyen d'un mécanisme de traction, par exemple du type hydraulique ou du type treuil motorisé comme décrit précédemment, ou bien encore au moyen d'un système à ressort en élastomère. Dans cette variante, il est envisageable de conserver la chambre d'air 205 pour assister le déplacement du piston puisque l'air présent dans la chambre d'air 205 serait également mis sous pression, comme décrit précédemment.

La Fig. 7 illustre une quatrième variante du dispositif d'aide au délestage 24 comportant une membrane gonflable 244 disposée dans le réservoir tubulaire 201 et séparant le réservoir tubulaire 201 en une chambre de fluide extincteur 203 et une chambre d'air 205. Dans cette variante, le dispositif d'aide au délestage 24 comporte un réservoir d'air sous pression 243 qui permet d'injecter de l'air sous pression dans la chambre d'air 205 pour gonfler la membrane gonflable 244. Le gonflage de la membrane gonflable 244, de l'extrémité 207 vers le dispositif de vidange 21, permet de pousser le fluide extincteur 200 vers le dispositif de vidange 21 et donc de faciliter le délestage du fluide extincteur 200.

Les dispositifs d'aide au délestage 24 ont été décrits ici comme étant des dispositifs pneumatiques. On comprend aisément que les dispositifs d'aide au délestage 24 peuvent fonctionner avec d'autres fluides, comme de l'eau, de l'huile ou du gaz, par exemple.

Il est envisageable de commander les dispositifs de délestage 24 grâce à l'unité de commande 23.

Les Figs. 8 et 9 illustrent un premier mode de réalisation de l'invention. Le premier mode de réalisation diffère du premier exemple en ce que les réservoirs tubulaires 201 (au nombre de quatre dans cet exemple) sont ici fixés au plancher 103 avec un angle α non nul par rapport au plancher 103. En d'autres termes, les réservoirs tubulaires 201 sont inclinés par rapport au plancher 103. Les réservoirs tubulaires 201 sont inclinés en direction des dispositifs de vidange 21, puisque dans cet exemple, chaque réservoir tubulaire 201 comporte un dispositif de vidange 21 et un système de libération 22 correspondant. Les réservoirs tubulaires 201 sont donc orientés en descendant vers les dispositifs de vidange 21.

De préférence, l'angle α d'inclinaison des réservoirs tubulaires 201 par rapport au plancher 103 est supérieur à un angle d'incidence de l'aéronef 1 lorsque ce dernier est en croisière, c'est-à-dire en vol hors phase d'atterrissage et de décollage. L'inclinaison des réservoirs tubulaires 201 vers les dispositifs de vidange 21 permet d'améliorer le délestage du fluide extincteur 200.

Dans cet exemple, les dispositifs de vidange 21 sont disposés entre les deux extrémités des réservoirs tubulaires 201 (en d'autres termes, les dispositifs de vidange 21 ne sont pas disposés à une extrémité des réservoirs tubulaires 201). Dans ce cas, et afin de respecter l'angle α d'inclinaison des réservoirs tubulaires 201, ces derniers présentent une forme sensiblement en V dans laquelle la pointe du V se situe au niveau du dispositif de vidange 21 et plutôt ici vers l'arrière de l'aéronef 1. Chaque réservoir tubulaire 201 comporte ainsi, une partie avant inclinée d'un angle α du haut vers le bas en progressant de l'avant vers le dispositif de vidange 21 et une partie arrière inclinée d'un angle β non nul par rapport au plancher 103 du haut vers le bas en progressant de l'arrière vers le dispositif de vidange 21. Les angles α et β sont sélectionnés en fonction de la géométrie du fuselage 10 de l'aéronef 1. De préférence, les angles α et β sont les plus élevés possibles pour favoriser la vidange des réservoirs tubulaires 201. Les angles α et β tiennent donc notamment compte de l'emplacement du plancher 103 et de la hauteur du fuselage 10, et plus particulièrement de la hauteur entre le plancher 103 et le plafond 111. Il est possible d'envisager des angles α et β permettant aux réservoirs tubulaires 201 de venir en contact avec le plafond 111 du fuselage 10 de l'aéronef, au niveau des extrémités situées respectivement du côté du cockpit et du côté de la queue de l'aéronef.

La mise en œuvre de réservoirs tubulaires 201 en forme de V permet de favoriser la vidange du fluide extincteur 200 hors des réservoirs tubulaires 201. En effet, cette inclinaison permet d'améliorer l'écoulement, par gravité, du fluide extincteur 200 en direction du dispositif 21 de vidange.

En comparaison avec un réservoir tubulaire 201 présentant une section rectiligne, un réservoir tubulaire 201 en forme de V permet en outre d'optimiser le flux du fluide extincteur 200 dans le réservoir tubulaire 201 de sorte à fournir une vitesse de vidange optimale.

Enfin, la mise en œuvre de réservoirs tubulaires 201 en forme de V offre une répartition optimale des masses sur la surface du plancher 103 de sorte à limiter les impacts du réservoir tubulaire 201 sur la structure du plancher 103. De cette manière, il est possible d'utiliser un aéronef de ligne sans avoir à modifier sa structure, et notamment sans avoir à renforcer ou modifier le plancher de l'aéronef.

Comme illustré sur la Fig. 8, l'inclinaison des réservoirs tubulaires 201 est compatible avec la mise en œuvre d'un dispositif d'aide au délestage tel que décrit en relation avec les Figs. 4 à 7. De cette manière, le délestage du fluide extincteur 200 est encore optimisé.

Comme illustré sur la Fig. 9, les réservoirs tubulaires 201 sont fixés au plancher 103 au niveau de plusieurs points de fixation distribués de manière régulière le long des réservoirs tubulaires 201 à l'aide de moyens de fixation 25 qui prennent ici la forme d'un sabot 251 et de bielles 253 de support reliant le réservoir tubulaire 201 au sabot 251. Dans cet exemple, l'aéronef 1 ne met en œuvre, à chaque point de fixation, qu'un seul sabot 251 fixé au plancher 103 et portant l'ensemble des réservoirs tubulaires 201 par l'intermédiaire de bielles 253. On pourrait aisément envisager de mettre en œuvre un nombre plus important de sabots 251 (par exemple un sabot 251 pour chaque réservoir tubulaire 201) au niveau de chaque point de fixation. Dans cet exemple, chaque réservoir tubulaire 201 est fixé au sabot 251 par une pluralité de paires de bielles 253 qui s'étendent de manière inclinée l'une par rapport à l'autre et en direction l'une de l'autre. On comprend bien évidemment qu'il serait envisageable de fixer les bielles 253 directement entre le réservoir tubulaire 201 et le plancher 103 de l'aéronef 1, c'est-à-dire sans mettre en œuvre le sabot 251.

Les points de fixation des réservoirs tubulaires sont répartis, par exemple à distance régulière, sur la longueur du réservoir tubulaire 201 de sorte à éviter une déformation de ce dernier. Pour des questions d'encombrement, les bielles 253 de deux réservoirs tubulaires 201 adjacents peuvent se croiser de sorte à limiter la surface nécessaire à la fixation des réservoirs tubulaires 201 sur le plancher 103. La longueur des bielles 253 est sélectionnée pour permettre d'obtenir l'angle α d'inclinaison souhaité, c'est-à-dire que les bielles 253 sont plus longues en s'éloignant dudit au moins un système de libération 22.

On comprend que la mise en œuvre de bielles 253 de support est également compatible avec la fixation des réservoirs tubulaires 201 du premier exemple qui n'est pas selon l'invention dans lequel les réservoirs tubulaires sont fixés parallèlement au plancher 103.

Les Figs. 10, 11 et 12 illustrent un deuxième mode de réalisation de l'invention. Le deuxième mode de réalisation diffère du premier mode de réalisation en ce que l'aéronef 1 ne met en œuvre qu'un seul réservoir tubulaire 201, de préférence de dimensions plus élevées. Dans cet exemple, le réservoir tubulaire 201 est fixé au plancher 103 avec un angle α par rapport au plancher 103. On comprend évidemment que le réservoir pourrait être fixé globalement parallèlement au plancher 103 comme dans le premier exemple qui n'est pas selon l'invention.

Dans cet exemple, le réservoir tubulaire 201 comporte quatre dispositifs de vidange 21 comportant chacun un tube de vidange 211. Dans cet exemple, les dispositifs de vidange 21 sont disposés entre les deux extrémités du réservoir tubulaire 201 (en d'autres termes, les dispositifs de vidange 21 ne sont pas disposés à une extrémité du réservoir tubulaire 201). Dans ce cas, et afin de respecter l'angle α d'inclinaison du réservoir tubulaire 201, ce dernier présente une forme sensiblement en V dans laquelle la pointe du V se situe au niveau des dispositifs de vidange 21 et plutôt ici vers l'arrière de l'aéronef 1.

Dans cet exemple, un seul système de libération 22 est mis en œuvre et permet d'autoriser ou non le passage du fluide extincteur 200 entre le réservoir tubulaire 201 et les dispositifs de vidange 21. On pourrait également envisager de mettre en œuvre un système de libération 22 pour chacun des dispositifs de vidange 21.

Dans cet exemple, le réservoir tubulaire 201 ne met pas en œuvre de dispositif d'aide au délestage 24 tel que décrit précédemment. La vidange du fluide extincteur 200 s'effectue donc par gravité et, optionnellement, la vidange est assistée au moyen d'air présent dans le réservoir tubulaire 201 qui serait mis sous pression lors du remplissage du réservoir tubulaire 201 ou par un réservoir d'air extérieur 243.

On comprend néanmoins que ce deuxième mode de réalisation est compatible avec la mise en œuvre d'un dispositif d'aide au délestage 24 sélectionné par exemple parmi ceux décrits précédemment en relation avec les Figs. 4 à 7.

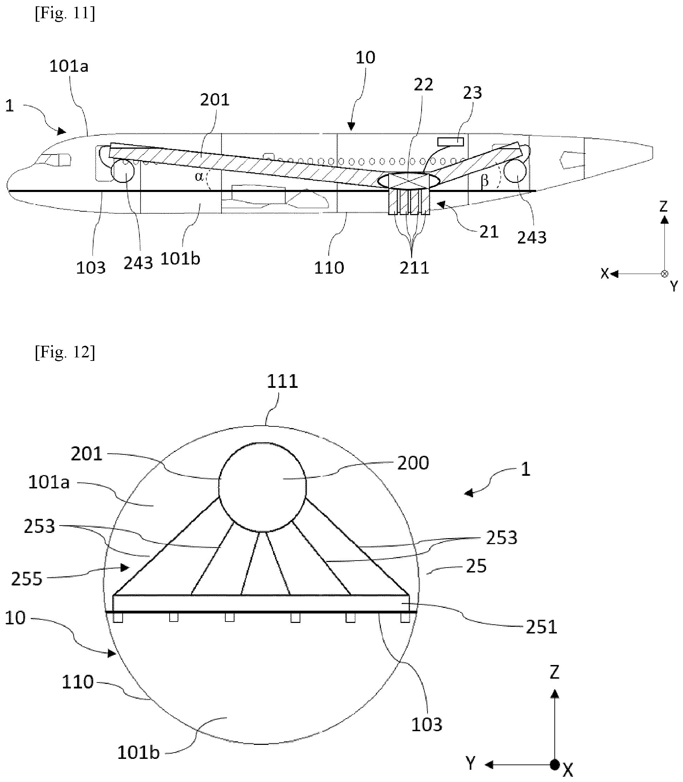

Comme illustré sur la Fig. 12, le réservoir tubulaire 201 est fixé au plancher 103 à de multiples points de fixation par l'intermédiaire de moyens de fixation 25 prenant ici la forme d'un sabot 251 fixé au sol et d'un ensemble 255 de bielles 253 de support disposées entre le sabot 251 et le réservoir tubulaire 201. On comprend donc que plusieurs sabots 251 et plusieurs ensembles 255 de bielles 253 sont mis en œuvre sur la longueur du réservoir tubulaire 201 de sorte à éviter la déformation de ce dernier. Les bielles 253 d'un ensemble 255 sont ici disposées sensiblement en V inversé entre le réservoir tubulaire 201 et le sabot 251. D'autres dispositions des bielles 253 sont envisageables.

Le réservoir tubulaire 201 du deuxième mode de réalisation peut par exemple présenter un diamètre (lorsque sa section est circulaire) d'environ 80 centimètres. Lorsque plusieurs réservoirs tubulaires 201 sont mis en œuvre, le diamètre des réservoirs tubulaires 201 est inférieur et par exemple de l'ordre de 40 cm. Dans tous les cas, les dimensions des réservoirs tubulaires 201 sont déterminées pour s'adapter à la charge admissible du plancher 103 de l'aéronef 1 de ligne sans avoir à effectuer des modifications structurales majeures.

## Revendications

1. Aéronef (1) comportant :
- un fuselage (10) dans lequel est fixé un plancher (103) sensiblement plan séparant ledit fuselage (10) en une partie supérieure (101a) et une partie inférieure (101b) ;
- au moins un réservoir tubulaire (201) destiné à contenir un fluide extincteur (200), ledit au moins un réservoir tubulaire (201) étant disposé dans la partie supérieure (101a) dudit fuselage (10) et étant fixé audit plancher (103) ;
- au moins un dispositif de vidange (21) fluidiquement connecté entre ledit au moins un réservoir tubulaire (201) et l'extérieur (110) dudit aéronef (1) en traversant successivement ledit plancher (103) et ledit fuselage (10) ;
- au moins un système de libération (22) mobile entre une position de retenue dans laquelle le système de libération (22) empêche le passage dudit fluide extincteur (200) entre ledit au moins un réservoir tubulaire (201) et ledit au moins un dispositif de vidange (21), et une position de vidange dans laquelle le système de libération (22) autorise le passage dudit fluide extincteur (200) entre ledit au moins un réservoir tubulaire (201) et ledit au moins un dispositif de vidange (21) ; et
- une unité de commande (23) arrangée pour commander le déplacement dudit au moins un système de libération (22) de ladite position de retenue à ladite position de vidange, et inversement ;
**caractérisé en ce que** ledit au moins un réservoir tubulaire (201) présente une forme sensiblement en V dans laquelle la pointe du V se situe au niveau dudit au moins un dispositif de vidange (21) et **en ce que** chaque réservoir tubulaire (201) comporte une partie avant inclinée d'un angle (α) non nul par rapport audit plancher (103).

2. Aéronef (1) selon la revendication 1, **caractérisé en ce que** chaque réservoir tubulaire (201) comporte en outre une partie arrière inclinée d'un angle (β) non nul par rapport au plancher (103).

3. Aéronef (1) selon la revendication 1 ou 2, **caractérisé en ce qu'**il comporte des moyens de fixation (25) dudit au moins un réservoir tubulaire (201) audit plancher (103).

4. Aéronef (1) selon la revendication 3, **caractérisé en ce que** lesdits moyens de fixation (25) dudit au moins un réservoir tubulaire (201) audit plancher (103) comportent au moins un sabot (251) fixé audit plancher (103) et au moins deux bielles (253) reliant ledit au moins un réservoir (201) audit au moins un sabot (251) et **en ce que** les bielles (253) sont plus longues en s'éloignant dudit au moins un système de libération (22).

5. Aéronef (1) selon l'une quelconque des revendications 1 à 4, **caractérisé en ce que** ledit au moins un réservoir tubulaire (201) comporte, au moins à une de ses extrémités, un dispositif d'aide au délestage (24) comportant des moyens pour mettre sous pression ledit au moins un réservoir tubulaire (201) et pousser ledit fluide extincteur (200) vers ledit au moins un dispositif de vidange (21).

6. Aéronef (1) selon la revendication 5, **caractérisé en ce que** ledit dispositif d'aide au délestage (24) comporte un piston (241) situé dans ledit réservoir tubulaire (201) se déplaçant en direction dudit au moins un dispositif de vidange (21) lors du délestage dudit fluide extincteur (200).

7. Aéronef (1) selon la revendication 6, **caractérisé en ce que** ledit dispositif d'aide au délestage (24) comprend un réservoir d'air sous pression (243), ledit réservoir d'air sous pression (243) étant arrangé pour injecter de l'air sous pression dans le réservoir tubulaire (201) pour déplacer le piston (241) vers ledit au moins un dispositif de vidange (21).

8. Aéronef (1) selon la revendication 7, **caractérisé en ce que** ledit dispositif d'aide au délestage (24) comprend un réservoir d'air (245, 245') disposé à l'intérieur dudit réservoir tubulaire (103), où l'air dudit réservoir d'air (245, 245') est mis sous pression lors du remplissage dudit réservoir tubulaire (201) avec ledit fluide extincteur (200) ou par déplacement dudit piston (241) par un treuil (247) motorisé.

9. Aéronef (1) selon la revendication 5, **caractérisé en ce que** ledit dispositif d'aide au délestage (24) comprend un réservoir d'air sous pression (243) et au moins une membrane gonflable (244), chaque membrane gonflable (244) étant disposée à une extrémité dudit au moins un réservoir tubulaire (201), où ledit réservoir d'air sous pression (243) est arrangé pour injecter de l'air sous pression dans ladite au moins une membrane gonflable (244) de sorte à gonfler celle-ci en direction dudit au moins un dispositif de vidange (21).

## Patentansprüche

1. Flugzeug (1), umfassend:
- einen Rumpf (10), in dem ein im Wesentlichen ebener Boden (103) befestigt ist, der den Rumpf (10) in einen oberen Teil (101a) und einen unteren Teil (101b) teilt;
- mindestens einen röhrenförmigen Behälter (201), der dazu bestimmt ist, ein Löschfluid (200) aufzunehmen, wobei der mindestens eine röhrenförmige Behälter (201) in dem oberen Teil (101a) des Rumpfes (10) angeordnet ist und an dem Boden (103) befestigt ist;
- mindestens eine Entleervorrichtung (21), die fluidisch zwischen dem mindestens einen röhrenförmigen Behälter (201) und dem Außenraum (110) des Flugzeugs (1) angeschlossen ist, wobei sie nacheinander den Boden (103) und den Rumpf (10) durchdringt;
- mindestens ein Freigabesystem (22), das zwischen einer Rückhalteposition, in der das Freigabesystem (22) den Durchgang des Löschfluids (200) zwischen dem mindestens einen röhrenförmigen Behälter (201) und der mindestens einen Entleervorrichtung (21) verhindert, und einer Entleerposition, in der das Freigabesystem (22) den Durchgang des Löschfluids (200) zwischen dem mindestens einen röhrenförmigen Behälter (201) und der mindestens einen Entleervorrichtung (21) zulässt, beweglich ist; und
- eine Steuereinheit (23), die dazu ausgelegt ist, die Verlagerung des mindestens einen Freigabesystems (22) von der Rückhalteposition zu der Entleerposition und umgekehrt zu steuern;
**dadurch gekennzeichnet, dass** der mindestens eine röhrenförmige Behälter (201) eine im Wesentlichen V-förmige Gestalt aufweist, bei der die Spitze des V an der mindestens einen Entleervorrichtung (21) liegt, und dass jeder röhrenförmige Behälter (201) einen vorderen Teil umfasst, der in Bezug auf den Boden (103) um einen Winkel (α) ungleich null geneigt ist.

2. Flugzeug (1) nach Anspruch 1, **dadurch gekennzeichnet, dass** jeder röhrenförmige Behälter (201) ferner einen hinteren Teil umfasst, der in Bezug auf den Boden (103) um einen Winkel (β) ungleich null geneigt ist.

3. Flugzeug (1) nach Anspruch 1 oder 2, **dadurch gekennzeichnet, dass** es Mittel (25) zum Befestigen des mindestens einen röhrenförmigen Behälters (201) an dem Boden (103) umfasst.

4. Flugzeug (1) nach Anspruch 3, **dadurch gekennzeichnet, dass** die Mittel (25) zum Befestigen des mindestens einen röhrenförmigen Behälters (201) an dem Boden (103) mindestens einen Schuh (251) umfassen, der an dem Boden (103) befestigt ist, und mindestens zwei Stangen (253), die den mindestens einen Behälter (201) mit dem mindestens einen Schuh (251) verbinden, und dadurch, dass die Stangen (253) mit zunehmender Entfernung von dem mindestens einen Freigabesystem (22) länger sind.

5. Flugzeug (1) nach einem der Ansprüche 1 bis 4, **dadurch gekennzeichnet, dass** der mindestens eine röhrenförmige Behälter (201) an mindestens einem seiner Enden eine Lastabwurfhilfsvorrichtung (24) umfasst, die Mittel umfasst, um den mindestens einen röhrenförmigen Behälter (201) unter Druck zu setzen und das Löschfluid (200) zu der mindestens einen Entleervorrichtung (21) hin zu drücken.

6. Flugzeug (1) nach Anspruch 5, **dadurch gekennzeichnet, dass** die Lastabwurfhilfsvorrichtung (24) einen Kolben (241) umfasst, der sich in dem röhrenförmigen Behälter (201) befindet und sich beim Lastabwurf des Löschfluids (200) in Richtung der mindestens einen Entleervorrichtung (21) verlagert.

7. Flugzeug (1) nach Anspruch 6, **dadurch gekennzeichnet, dass** die Lastabwurfhilfsvorrichtung (24) einen Druckluftbehälter (243) umfasst, wobei der Druckluftbehälter (243) dazu ausgelegt ist, Druckluft in den röhrenförmigen Behälter (201) einzuleiten, um den Kolben (241) zu der mindestens einen Entleervorrichtung (21) hin zu verlagern.

8. Flugzeug (1) nach Anspruch 7, **dadurch gekennzeichnet, dass** die Lastabwurfhilfsvorrichtung (24) einen Luftbehälter (245, 245') umfasst, der innerhalb des röhrenförmigen Behälters (103) angeordnet ist, wobei die Luft des Luftbehälters (245, 245') beim Füllen des röhrenförmigen Behälters (201) mit dem Löschfluid (200) oder durch Verlagerung des Kolbens (241) durch eine motorisierte Winde (247) unter Druck gesetzt wird.

9. Flugzeug (1) nach Anspruch 5, **dadurch gekennzeichnet, dass** die Lastabwurfhilfsvorrichtung (24) einen Druckluftbehälter (243) und mindestens eine aufblasbare Membran (244) umfasst, wobei jede aufblasbare Membran (244) an einem Ende des mindestens einen röhrenförmigen Behälters (201) angeordnet ist, wobei der Druckluftbehälter (243) dazu ausgelegt ist, Druckluft in die mindestens eine aufblasbare Membran (244) einzuleiten, so dass diese in Richtung der mindestens einen Entleervorrichtung (21) aufgeblasen wird.

## Claims

1. Aircraft (1) comprising:
- a fuselage (10) in which a substantially flat floor (103) is fastened, separating said fuselage (10) into an upper part (101a) and a lower part (101b);
- at least one tubular tank (201) intended to contain an extinguishing fluid (200), said at least one tubular tank (201) being positioned in the upper part (101a) of said fuselage (10) and being fastened to said floor (103);
- at least one discharge device (21) fluidly connected between said at least one tubular tank (201) and the outside (110) of said aircraft (1), passing in succession through said floor (103) and said fuselage (10);
- at least one release system (22) movable between a retention position in which the release system (22) prevents said extinguishing fluid (200) from passing between said at least one tubular tank (201) and said at least one discharge device (21), and a discharge position in which the release system (22) permits said extinguishing fluid (200) to pass between said at least one tubular tank (201) and said at least one discharge device (21); and
- a control unit (23) arranged to control the movement of said at least one release system (22) from said retention position to said discharge position, and vice versa;
**characterized in that** said at least one tubular tank (201) has a substantially V-shaped in which the tip of the V is situated at the level of said at least one discharge device (21), and wherein each tubular tank (201) comprises a front part inclined by non-zero angle (α) relative to said floor (103).

2. Aircraft (1) according to Claim 1, **characterized in that** each tubular tank (201) comprises a rear part inclined by a non-zero angle (β) relative to the floor (103).

3. Aircraft (1) according to Claim 1 or 2, **characterized in that** it comprises means (25) for fastening said at least one tubular tank (201) to said floor (103).

4. Aircraft (1) according to Claim 3, **characterized in that** said means (25) for fastening said at least one tubular tank (201) to said floor (103) comprise at least one skid (251) fastened to said floor (103) and at least two struts (253) connecting said at least one tank (201) to said at least one skid (24) and **in that** the struts (253) are longer the further away they are from said at least one release system (22).

5. Aircraft (1) according to any of Claims 1 to 4, **characterized in that** said at least one tubular tank (201) comprises, at least at one end thereof, an offloading aid device (24) comprising means for pressurizing said at least one tubular tank (201) and pushing said extinguishing fluid (200) towards said at least one discharge device (21).

6. Aircraft (1) according to Claim 5, **characterized in that** said offloading aid device (24) comprises a piston (241) positioned inside said tubular tank (201) that moves in the direction of said at least one discharge device (21) when said extinguishing fluid (200) is being offloaded.

7. Aircraft (1) according to Claim 6, **characterized in that** said offloading aid device (24) comprises a pressurized air tank (243), said pressurized air tank (243) being arranged to inject pressurized air into the tubular tank (201) in order to move the piston (241) towards said at least one discharge device (21).

8. Aircraft (1) according to Claim 7, **characterized in that** said offloading aid device (24) comprises an air tank (245, 245') positioned inside said tubular tank (201), wherein the air in said air tank (245, 245') is pressurized when said tubular tank (201) is being filled with said extinguishing fluid (200) or by the movement of said piston (241) using a motorized winch (247).

9. Aircraft (1) according to Claim 5, **characterized in that** said offloading aid device (24) comprises a pressurized air tank (243) and at least one inflatable membrane (244), each inflatable membrane (244) being positioned at one end of said at least one tubular tank (201), wherein said pressurized air tank (243) being arranged to inject pressurized air into said at least one inflatable membrane (244 ) in order to inflate said at least one inflatable membrane (244) in the direction of said at least one discharge device (21).
